# DEMANDE DE BREVET EUROPEEN

(11) **EP 1 557 687 A1**
(43) Date de publication de la demande: **27.07.2005**
(21) Numéro de dépôt: 05290157.6
(22) Date de dépôt: 24.01.2005
(51) Int. Cl.: G01S 1/00, G01S 5/00

(54) **Procédé pour le support de services de localisation dans un système de radiocommunications mobiles**

(30) Priorité: 26.01.2004 FR 0400714
(71) Demandeur: Evolium S.A.S., 75008 Paris (FR)
(72) Inventeur: Bourdeaut, Stanislas, 75015 Paris (FR)
(74) Mandataire: El Manouni, Josiane

(57) **Abrégé**

Un des objets de la présente invention est un procédé pour le support de services de localisation dans un système de radiocommunications mobiles, procédé dans lequel une station mobile reçoit d'au moins un élément de réseau impliqué dans des services de localisation, pour la mise en oeuvre d'une procédure de mesure de position, au moins une information apte à indiquer si le type de méthode requis pour cette mesure de position correspond au type de méthode dit « Conventional GPS » (selon lequel la station mobile se comporte comme un récepteur conventionnel pour système de positionnement par satellite).

## Description

La présente invention concerne d'une manière générale les systèmes de radiocommunications mobiles.

D'une manière générale, les systèmes de radiocommunications mobiles font l'objet de normalisation, et pour une description complète de ces systèmes on pourra se reporter aux normes correspondantes, publiées par les organismes de normalisation correspondants.

Brièvement, un tel système comporte un réseau de radiocommunications mobiles communiquant avec des terminaux mobiles et avec des réseaux extérieurs. Le réseau de radiocommunications mobiles comporte lui-même un réseau d'accès radio (ou RAN, pour « Radio Access Network ») chargé principalement de la transmission et de la gestion des ressources radio sur l'interface radio entre le réseau et les terminaux mobiles, et un réseau coeur (ou CN, pour « Core Network ») chargé principalement du routage et de la gestion des communications.

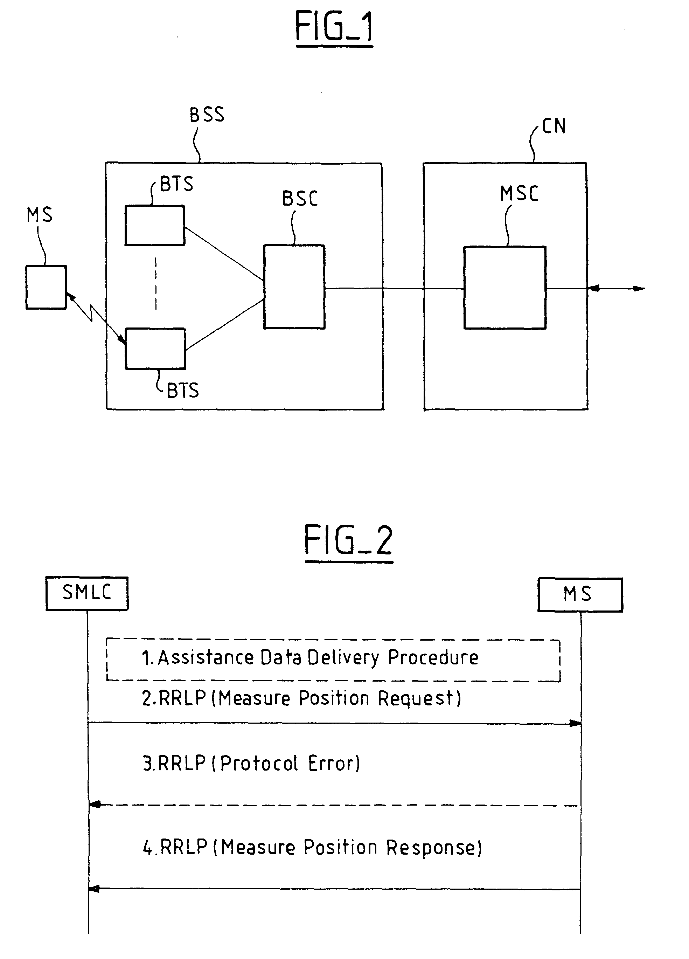

Par exemple, comme illustré sur la figure 1, dans un système de type GSM (« Global System for Mobile communications ») :
- le terminal mobile est appelé MS (« Mobile Station »),
- le réseau d'accès radio (ou RAN) est appelé BSS (« Base Station Subsystem »), et est formé de stations de base ou BTS (« Base Transceiver Station ») et de contrôleurs de stations de base ou BSC (« Base Station Controller »),
- le réseau coeur (ou CN) comporte notamment, pour un domaine lié à la commutation de circuit, des éléments de réseau de type MSC (« Mobile Switching center »), et pour un domaine lié à la commutation de paquet, des éléments de réseau de type SGSN (« Serving GPRS Support Node »).

La présente invention concerne plus particulièrement les services de localisation pouvant être mis en oeuvre dans ces systèmes, pour déterminer la position géographique des utilisateurs de stations mobiles. La présente invention concerne plus particulièrement encore le support de ces services dans ces systèmes.

Dans ce qui suit, on considère plus particulièrement, à titre d'exemple, les services de localisation de type LCS (« LoCation Services ») tels que définis notamment dans la spécification 3GPP TS 03.71 (jusqu'en R99) 3GPP TS 43.059 (à partir de Rel-4) publiée par le 3GPP (« 3^{rd} Generation Partnership Project »), et on considère plus particulièrement, à titre d'exemple, un système de type GSM. La présente invention n'est cependant pas limitée à ce type de services de localisation et/ou à ce type de système ; notamment la présente invention est également applicable à des systèmes de type UMTS (« Universal Mobile Telecommunication System »).

On rappelle tout d'abord brièvement certains mécanismes de support de ces services dans ces systèmes ; pour une description plus complète de ces mécanismes, on pourra se référer notamment aux spécifications 3GPP TS 03.71 et 3GPP TS 04.31 publiées par le 3GPP (« 3rd Generation Partnership Project »).

Des entités de support de services de localisation sont prévues, telles que notamment, dans le réseau d'accès radio, une entité SMLC (« Serving Mobile Location Center ») chargée, sur réception d'une requête de localisation, de la coordination des différentes actions nécessaires à la fourniture de services de localisation.

Notamment, une procédure de mesure de position est prévue, permettant au SMLC de requérir de la station mobile des données de mesure de position ou une estimation de position, et à la station mobile de répondre à cette requête avec des données de mesure de postion ou une estimation de position. La procédure de mesure de position comporte des échanges de signalisation selon un protocole appelé RRLP (Radio Resource LCS Protocol »), comme rappelé sur la figure 2 reprise de la spécification 3GPP TS 04.31 :
- dans une étape 2, le SMLC envoie au MS (via le BSS) une requête de mesure de position ou « Measure Position Request »,
- dans une étape 4, le MS envoie au SMLC (via le BSS) une réponse de mesure de position ou « Measure Position Response »,
- l'étape 2 peut (ce qui est représenté par des pointillés sur la figure 2) être précédée par une étape 1 correspondant à la fourniture de données d'assistance au MS (ou « Assistance Data Delivery Procedure »),
- il est aussi possible (ce qui est également représenté par des pointillés sur la figure 2) que dans une étape 3 le MS indique au SMLC une erreur de protocole (ou « Protocol Error »), si la requête reçue dans l'étape 2 est incomplète ou incompréhensible.

La requête de mesure de position envoyée par le SMLC au MS dans l'étape 2 contient notamment la méthode de mesure de position et le type de méthode requis ; elle peut aussi contenir des données d'assistance. La réponse de mesure de position envoyée par le MS au SMLC dans l'étape 4 peut contenir des données de mesure de position ou une estimation de position (suivant le type de méthode requis) ; elle peut aussi contenir une indication d'erreur (permettant notamment d'indiquer que des données d'assistance sont manquantes ou que des données d'assistance additionnelles sont nécessaires).

La méthode de mesure de position et le type de méthode requis sont sélectionnés par le SMLC notamment en fonction de la ou des méthodes de mesure de position supportées par le MS (indiquées par le MS au réseau dans un élement d'information (ou IE, pour « Information element »), selon la spécification 3GPP TS 24.008) et de la qualité de service requise.

On distingue différentes méthodes de positionnement, notamment :
- des méthodes utilisant les signaux radio transmis dans les systèmes cellulaires de radiocommunications mobiles eux-mêmes, telles que notamment :
   - des méthodes basées sur l'identité de cellule (ou « Cell Identity ») et l'avance temporelle (ou « TA », pour « Timing Advance » ),
   - des méthodes basées sur la différence de temps observée (ou « E-OTD », pour « Enhanced Observed Time Difference » ),
- des méthodes utilisant les signaux radio transmis dans les systèmes de positionnement par satellite, notamment :
   - des méthodes basées sur la technologie GPS (« Global Positioning System »).

On distingue aussi différents types de méthodes de positionnement, notamment:
- les méthodes (appelées aussi « MS based ») dans lesquelles le calcul d'estimation de position est effectué dans la station mobile, éventuellement avec une assistance du réseau,
- les méthodes dans lesquelles le calcul d'estimation de position est effectué dans le réseau, éventuellement avec une assistance de la station mobile ( « MS assisted »).

Dans ce contexte, la présente invention reconnaît notamment que certains problèmes se posent dans l'état actuel de la norme, plus particulièrement dans le cas de méthodes de positionnement basées sur la technologie GPS.

Dans l'état actuel de la norme (représentée notamment par la spécification 3GPP TS 04.31) le type de méthode, tel que transmis par le SMLC au MS dans la requête de mesure de position selon le protocole RRLP, indique seulement s'il s'agit de méthode « MS based » ou « MS assisted ».

Or, dans le cas de technologie GPS, on peut aussi distinguer:
- les méthodes (appelées aussi « Conventional GPS ») selon lesquelles le calcul d'estimation de position est effectué dans la station mobile (équipée d'un récepteur GPS conventionnel) sans que la station mobile ait besoin de données d'assistance du réseau,
- les méthodes (appelées aussi « Assisted GPS ») selon lesquelles la station mobile a besoin de données d'assistance du réseau, soit (selon la méthode « MS assisted ») pour pouvoir effectuer des mesures de position, soit (selon la méthode « MS based ») pour pouvoir effectuer des mesures de position et/ou un calcul d'estimation de position.

L'état actuel de la norme ne permet pas à une station mobile recevant une requête de mesure de position, de savoir si la méthode requise est de type « Conventional GPS ». Par exemple, une station mobile équipée pour supporter à la fois la méthode « Conventional GPS » et la méthode « Assisted GPS » ne sait pas, au cas où elle disposerait déjà de données d'assistance (par exemple parce qu'une procédure de localisation vient d'être effectuée pour cette station mobile dans une cellule supportant la méthode « Assisted GPS ») si elle doit utiliser la méthode « Conventional GPS » ou la méthode « Assisted GPS », et dans ce cas elle peut inutilement demander au réseau des données d'assistance additionnelles, ce qui entraîne inutilement des échanges de signalisation additionnels occupant inutilement des ressources de transmission et/ou introduisant inutilement des délais dans la procédure de localisation considérée.

Des problèmes additionnels se posent en outre pour le cas des versions actuelle ou plus anciennes de la norme.

On rappelle que d'une manière générale, des formats de messages normalisés sont utilisés sur des interfaces ouvertes telles que notamment, pour le protocole RRLP, les interfaces entre SMLC et BSS d'une part et entre BSS et MS d'autre part. Ainsi, à partir des différents éléments d'informations (ou IE, pour « Information Element »), à transmettre dans un message, une séquence de bits à transmettre est obtenue en suivant des règles de codage selon une syntaxe telle que notamment l'ASN.1 (« Abstract Syntax Notation 1 »). Pour plus de détails sur ce codage, pour la transmission de messages RRLP, on pourra se référer notamment à la spécification 3GPP TS 04.031.

Dans le cas des versions actuelle ou plus anciennes de la norme, il n'est pas possible de modifier la norme pour introduire de nouvelles valeurs pour le codage, selon le ASN.1 rappelé ci-dessus, de l'élément d'information correspondant au type de méthode (ou IE « Method Type »), car sinon de nouveaux équipements conformes à une telle version modifiée de la norme ne pourraient pas inter-opérer avec des équipements existants conformes à des versions plus anciennes.

La présente invention a notamment pour but de résoudre tout ou partie de ces problèmes et/ou d'éviter tout ou partie de ces inconvénients. Plus généralement, la présente invention a pour but d'améliorer la qualité de service pour le support des services de localisation dans les systèmes de radiocommunications mobiles.

Un des objets de la présente invention est un procédé pour le support de services de localisation dans un système de radiocommunications mobiles, procédé dans lequel une station mobile reçoit d'au moins un élément de réseau impliqué dans des services de localisation, pour la mise en oeuvre d'une procédure de mesure de position, au moins une information apte à indiquer si le type de méthode requis pour cette mesure de position correspond au type de méthode dit « Conventional GPS » (selon lequel la station mobile se comporte comme un récepteur conventionnel pour système de positionnement par satellite).

Suivant une autre caractéristique, la station mobile reçoit dudit élément de réseau une requête de mesure de position incluant un élément d'information indiquant si le type de mesure requis pour cette mesure de position correspond au type de méthode dit « Conventional GPS ».

Suivant une autre caractéristique, la station mobile reçoit dudit élément de réseau une requête de mesure de position incluant un élément d'information indiquant que le type de mesure requis pour cette mesure de position correspond au type de méthode dit « MS based » (selon lequel le calcul de position est effectué par la station mobile) et ladite requête de mesure de position ne contenant pas de données d'assistance.

Suivant une autre caractéristique, à la réception de ladite requête, une station mobile n'ayant pas déjà reçu de données d'assistance du réseau considère que le type de mesure requis correspond au type de méthode dit « Conventional GPS ».

Suivant une autre caractéristique, à la réception de ladite requête, une station mobile ayant déjà reçu des données d'assistance du réseau, ne demande pas plus de N fois des données d'assistance additionnelles au réseau ou pas pendant plus longtemps qu'une durée T, et si le réseau ne fournit pas lesdites données d'assistance additionnelles au plus tard au bout de N fois ou avant l'expiration d'une durée T, la station mobile considère que le type de méthode requis correspond au type de méthode dit « Conventional GPS ».

La présente invention a également pour objet une station mobile et un élément de réseau (tel que notamment un élément de réseau de type SMLC), comportant des moyens pour mettre en oeuvre un procédé suivant l'invention

Notamment, un des objets de la présente invention est une station mobile, comportant des moyens pour recevoir d'un élément de réseau de radiocommunications mobiles de type « Serving Mobile Location Center », pour la mise en oeuvre d'une mesure de position, au moins une information apte à indiquer si le type de méthode requis pour cette mesure de position correspond au type de méthode dit « Conventional GPS ».

Suivant une autre caractéristique, la station mobile comporte des moyens pour recevoir dudit élément de réseau, une requête de mesure de position incluant un élément d'information indiquant que le type de méthode requis pour cette mesure de position correspond au type de méthode dit « MS based », et ladite requête de mesure de position ne contenant pas de données d'assistance.

Notamment, un des objets de la présente invention est un élément de réseau de radiocommunications mobiles de type « Serving Mobile Location Center », comportant des moyens pour transmettre à une station mobile, pour la mise en oeuvre d'une mesure de position, au moins une information apte à indiquer si le type de méthode requis pour cette mesure de position correspond au type de méthode dit « Conventional GPS ».

Suivant une autre caractéristique, l'élément de réseau comporte des moyens pour transmettre à une station mobile une requête de mesure de position incluant un élément d'information indiquant que le type de méthode requis pour cette mesure de position correspond au type de méthode dit « MS based », et ladite requête de mesure de position ne contenant pas de données d'assistance.

La présente invention a également pour objet un système de radiocommunications mobiles comportant au moins une telle station mobile et/ou un tel élément de réseau.

D'autres objets et caractéristiques de la présente invention apparaîtront à la lecture de la description suivante d'exemples de réalisation, faite en relation avec les figures ci-annexées dans lesquelles:
- la figure 1 est destinée à rappeler l'architecture générale d'un système cellulaire de radiocommunications mobiles, à titre d'exemple de type GSM,
- la figure 2 est destinée à rappeler les principales étapes d'une procédure de mesure de position pour la localisation d'une station mobile, à titre d'exemple dans le cas de services de localisation de type LCS (« LoCation Services »), dans un système de type GSM.

Comme précédemment, on considère à titre d'exemple les services de localisation de type LCS (« LoCation Services ») tels que définis notamment dans la spécification 3GPP TS 03.71, et on considère plus particulièrement, à titre d'exemple, un système de type GSM.

Pour le cas de versions futures de la norme (en l'occurrence les versions à partir de la version R6), la présente invention suggère d'introduire une nouvelle signalisation permettant de requérir une mesure de position selon le protocole RRLP. La présente invention propose d'introduire le type de méthode « Conventional GPS » parmi les types de méthodes possibles susceptibles d'être indiqués par le SMLC au MS dans la requête RRLP de mesure de position « Measure Position Request ». En d'autres termes, la présente invention suggère de prévoir une nouvelle valeur (en l'occurrence la valeur « Conventional GPS») pour le codage de l'IE « Method type », en plus des valeurs « MS based » et « MS assisted ».

Pour le cas des versions actuelle et plus anciennes de la norme, la présente invention propose d'activer la méthode « Conventional GPS » en envoyant du SMLC au MS une requête RRLP de mesure de position indiquant « MS based » comme type de méthode, sans données d'assistance.

La présente invention propose en outre que, à la réception d'une telle requête :
- Un MS équipé pour supporter seulement le type de méthode « Conventional GPS » devrait alors considérer que la méthode requise par le SMLC est de type « Conventional GPS ».
- Pour le cas de MS équipé pour supporter à la fois les méthodes « Conventional GPS » et « Assisted GPS » :
   - si le MS recevant une telle requête n'a pas déjà reçu de données d'assistance du réseau, il devrait considérer que la méthode requise par le SMLC est de type « Conventional GPS »,
   - si le MS a déjà reçu des données d'assistance du réseau (notamment si le MS est déjà en mode « Assisted GPS ») la présente invention propose en outre de tenir compte du fait que le MS peut alors requérir des données d'assistance additionnelles du réseau (en l'occurrence en envoyant un message RRLP de réponse de mesure de position « Measure Position Response » dans lequel l'IE « Location Error » est mis à la valeur « gpsAssDataMissing » ou « gpsLocalAssDataMssing »). Dans ce cas, afin de permettre à la procédure de localisation d'aboutir, la présente invention propose que la station mobile ne devrait pas rester dans le mode « Assisted GPS » pendant plus d'une durée prédéterminée T, ou en d'autres termes la station mobile ne devrait pas envoyer l'IE « Location Error » plus de N fois. Lorsque la station mobile a envoyé cet IE plus de N fois, ou lorsque la durée T a expiré, elle devrait avoir retourné au mode « Conventional GPS ».

Dans l'exemple considéré, l'invention propose notamment d'introduire les notions suivantes dans les versions actuelles et plus anciennes de la norme (en l'occurrence les versions R98, R99, R4 et R5) :
- l'invention propose d'introduire dans la spécification 3GPP TS 04.31 la notion selon laquelle la valeur « MS based » de l'IE « Method type » doit être prise pour « Conventional » ou « MS based »,
- l'invention propose d'introduire dans la spécification 3GPP TS 03.71 la notion selon laquelle si le type de mesure « Conventional » ou « MS based » a été requis par le SMLC dans le message RRLP « Measure Position Request », et si le MS n'a pas déjà reçu de données d'assistance du réseau, le MS devrait considérer que le SMLC requiert un type de mesure correspondant à « GPS conventional »,
- l'invention propose d'introduire dans la spécification 3GPP TS 03.71 la notion selon laquelle si le type de mesure « Conventional » ou « MS based » a été requis par le SMLC dans le message RRLP « Measure Position Request », et si le MS a déjà reçu des données d'assistance du réseau, le MS ne devrait pas demander au SMLC des données d'assistance additionnelles plus de N fois ou pas pendant plus longtemps qu'une durée T, et dans le cas où où le SMLC ne fournit pas au MS de données d'assistance au plus tard au bout de N fois ou avant l'expiration d'une durée T, le MS devrait considérer que le SMLC requiert un type de mesure correspondant à « GPS conventional ». Le mobile aura donc pu éventuellement décidé de transmettre ses mesures avant les N demandes de données d'assistance additionnelles au réseau ou avant la durée T s'il a pu effectuer ses mesures.

La présente invention a également pour objet une station mobile et un élément de réseau (tel que notamment un élément de réseau de type SMLC), comportant des moyens pour mettre en oeuvre un procédé suivant l'invention, et un système de radiocommunications mobiles comportant au moins une telle station mobile et/ou un tel élément de réseau.

La réalisation particulière de tels moyens ne présentant pas de difficulté particulière pour l'homme du métier, de tels moyens ne nécessitent pas d'être décrits ici de manière plus détaillée que ce qui a été fait précédemment, par leur fonction.

## Revendications

1. Procédé pour le support de services de localisation dans un système de radiocommunications mobiles, procédé dans lequel une station mobile reçoit d'au moins un élément de réseau impliqué dans des services de localisation, pour la mise en oeuvre d'une procédure de mesure de position, au moins une information apte à indiquer si le type de méthode requis pour cette mesure de position correspond au type de méthode dit « Conventional GPS ».

2. Procédé selon la revendication 1, dans lequel la station mobile reçoit dudit élément de réseau une requête de mesure de position incluant un élément d'information indiquant que le type de méthode requis pour cette mesure de position correspond au type de méthode dit « MS based », et ladite requête de mesure de position ne contenant pas de données d'assistance.

3. Station mobile, comportant des moyens pour recevoir d'un élément de réseau de radiocommunications mobiles de type « Serving Mobile Location Center », pour la mise en oeuvre d'une mesure de position, au moins une information apte à indiquer si le type de méthode requis pour cette mesure de position correspond au type de méthode dit « Conventional GPS».

4. Station mobile selon la revendication 3, comportant des moyens pour recevoir dudit élément de réseau, une requête de mesure de position incluant un élément d'information indiquant que le type de méthode requis pour cette mesure de position correspond au type de méthode dit « MS based » , et ladite requête de mesure de position ne contenant pas de données d'assistance.

5. Elément de réseau de radiocommunications mobiles de type « Serving Mobile Location Center », comportant des moyens pour transmettre à une station mobile, pour la mise en oeuvre d'une mesure de position, au moins une information apte à indiquer si le type de méthode requis pour cette mesure de position correspond au type de méthode dit « Conventional GPS ».

6. Elément de réseau selon la revendication 5, comportant des moyens pour transmettre à ladite station mobile une requête de mesure de position incluant un élément d'information indiquant que le type de méthode requis pour cette mesure de position correspond au type de méthode dit « MS based », et ladite requête de mesure de position ne contenant pas de données d'assistance.

7. Système de radiocommunications mobiles comportant au moins une station mobile selon l'une des revendications 3 ou 4 et/ou un élément de réseau suivant l'une des revendications 5 ou 6.
